Europäisches Patentamt

European Patent Office

Office européen des brevets

(19)

(11) Veröffentlichungsnummer: **0 058 774**
**B1**

# (12) EUROPÄISCHE PATENTSCHRIFT

(45) Veröffentlichungstag der Patentschrift:
**05.12.84**

(51) Int. Cl.³: **C 21 C 5/52,** F 27 D 3/00

(21) Anmeldenummer: **81110310.0**

(22) Anmeldetag: **10.12.81**

(54) **Anordnung eines Elektroschmelzofens und zugehöriger Bunker und Beschickungseinrichtungen.**

(30) Priorität: **25.02.81 DE 3107016**

(43) Veröffentlichungstag der Anmeldung:
**01.09.82 Patentblatt 82/35**

(45) Bekanntmachung des Hinweises auf die Patenterteilung:
**05.12.84 Patentblatt 84/49**

(84) Benannte Vertragsstaaten:
**AT BE DE FR GB IT LU NL SE**

(56) Entgegenhaltungen:
**DE - A - 1 953 378**
**DE - A - 2 313 660**
**DE - A - 2 632 707**
**DE - B - 2 405 038**
**US - A - 3 791 636**
**US - A - 3 936 588**

(73) Patentinhaber: **M.A.N. MASCHINENFABRIK AUGSBURG-NÜRNBERG Aktiengesellschaft, Bahnhofstrasse 66, D-4200 Oberhausen 11 (DE)**

(72) Erfinder: **Paskarbeit, Edgar, Ripsdörnestrasse 25, D-4200 Oberhausen 12 (DE)**
Erfinder: **Schöler, Horst Dieter, Dr.-Ing., Lutherstrasse 28, D-4100 Duisburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die emissionsgeschützte Anordnung eines in der Ofenhalle auf der Seite nahe der an die Ofenhalle angrenzenden Pfannenhalle befindlichen Elektroschmelzofens und oberhalb des Elektroschmelzofens angeordneter Bunker-Beschickungseinrichtungen, mit denen das Beschickungsgut über Förderer in diese Bunker transportiert, aus diesen Bunkern über Förder- und Dosiereinrichtungen abgezogen und durch Beschickungsrohre dem Ofengefäss zugeführt wird.

Bei der Anordnung eines Elektroschmelzofens mit Aufgabeeinrichtung für Eisenträger, z.B. Eisenschwamm, gemäss vorgenannter Gattung ist vorgesehen, dass der Eisenträger aus einem vorgeschalteten Lagersystem in ein oberhalb des Ofens befindliches Vorratsgefäss gelangt und von diesem den Chargieröffnungen am Ofen zugeführt wird (DE-OS 1 953 378). Abgesehen davon, dass das Vorratsgefäss mit Förderer auf einem ein- und ausfahrbaren und schwenkbaren Gestell angeordnet ist, was einen zusätzlichen Platzbedarf erfordert, kann die Zugabe von Legierungsmitteln und Zuschlagstoffen in den Ofen und für sekundärmetallurgische Massnahmen in die Pfanne nur in bisher üblicher Weise erfolgen, die darin besteht, dass die abgewogenen Mengen der benötigten Legierungs- bzw. Zuschlagmittel mittels Transportfahrzeugen durch eine Öffnung in den Ofen eingebracht bzw. der abgestochenen Schmelze in der Pfanne zugesetzt werden. Die Lagerung der Legierungs- und Zuschlagmittel erfolgt meist in der Ofenhalle. Der Transport der Mittel vom Lagerplatz zum Ofen bzw. der Pfanne ist aufwendig.

Eine Anlage zur schmelzmetallurgischen Erzeugung von Metallen mit den im Oberbegriff des Hauptanspruchs angegebenen Merkmalen ist aus der DE-B1-2 405 038 bekannt.

Der Erfindung liegt die Aufgabe zugrunde, einen Elektroschmelzofen und die zugehörigen Bunker und Beschickungseinrichtungen so anzuordnen, dass bei geringstmöglichem Platzbedarf eine optimale kontinuierliche Zuführung des Beschickungsgutes in den Ofen und in die Schmelze während und nach Abstich aus dem Ofen erreicht wird und störende Emissionen in der Ofenhalle und in der an die Ofenhalle angrenzenden Pfannenhalle weitgehend vermieden werden.

Die Lösung der Aufgabe besteht darin, dass die Eisenträger-, Zuschlagstoff- und Legierungsmittelbunker mit den zugehörigen Auslass-, Förder- und Dosierungseinrichtungen hintereinander in Hallenlängsrichtung in der senkrechten Ebene zwischen den Kranbahnen der Ofenhalle und der angrenzenden Pfannenhalle angeordnet sind, und ein tiefergelegener reversibler Förderer mit an beiden Enden befindlichen Abwurfeinrichtungen mit anschliessenden Beschickungsrohren quer zur Hallenlängserstreckung vorgesehen ist.

Der für die Unterbringung der Bunker und Beschickungseinrichtungen vorgesehene Raum in Längserstreckung der Halle in der senkrechten Ebene zwischen den Kranbahnen der Ofen- und der daran angrenzenden Pfannenhalle ist besonders geeignet, da hier die grösste Hallenhöhe vorhanden ist und dieser Raum bisher zumeist ungenutzt war. Die hintereinander angeordneten Bunker für das Beschickungsgut, z.B. Eisenschwamm, Zuschlagstoffe und Legierungsmittel, erlauben eine Materialzufuhr mittels über alle Bunker verfahrbarer Förderer, die von ausserhalb der Halle gelegenen Lagerplätzen beschickt werden. Das Beschickungsgut wird von den Auslasseinrichtungen an den Bunkern auf Förder- und Dosiereinrichtungen bekannter Bauart geleitet, die unmittelbar zwischen den Trägern der Kranbahnen zwischen der Ofen- und Pfannenhalle angeordnet sind. Der Raum für die Auslass-, Förder- und Dosiereinrichtungen ist somit an beiden Längsseiten von den Kranbahnträgern begrenzt und ist oben und unten abgedeckt. Bei der Übergabe anfallender Staub sowie Lärm können daher nicht in die angrenzenden Hallen eindringen. Der Austrag aus den Legierungsmittel und Zuschlagstoffe enthaltenden Bunkern erfolgt in eine parallel der Fördereinrichtung verfahrbaren Dosiereinrichtung, die für die genaue Abwägung von kleinen Mengen eingerichtet ist. Das Beschickungsgut wird dem tiefergelegenen, quer in die Ofenhalle führenden reversiblen Förderer zugeführt und an der ofenseitigen Abwurfeinrichtung in ein oder mehrere daran angeschlossene Beschickungrohre für die Ofenfüllung geleitet. Zur Durchführung von sekundärmetallurgischen Massnahmen in der Pfanne sind die notwendigen Materialien ebenfalls in einem oder mehreren der oben in Reihe angeordneten Bunker gelagert. Sie werden über die verfahrbare Dosiereinrichtung auf den reversiblen Förderer gegeben, dessen Transportrichtung nunmehr umgekehrt wird, und die Zuschlagmittel der Abwurfeinrichtung an dem der Pfannenhalle zugewandten Ende des Förderers zugeführt. Durch hier angeschlossene Beschickungsrohre können die Materialien der Schmelze während des Abstiches aus dem Ofen und bei etwas vorgezogenem Pfannenwagen während der Nachbehandlung beigegeben werden. Zur Vermeidung von Staubausbreitung sind der reversible Förderer und die Abwurfeinrichtungen allseitig verkleidet. Um die vom Ofen ausgehenden störenden Einflüsse von Rauchgas, Schall und Hitze weitgehend abzubauen, ist der Elektroschmelzofen von einem Gehäuse mit der Ofenhalle zugewandter, verfahrbarer Seitenwand allseitig umgeben. Für die Durchführung der Beschickungsrohre sind im Gehäuse Öffnungen vorhanden. Die Rauchgase werden aus dem Gehäuse auf bekannte Weise abgesaugt. Die Anordnung der Bunker und Beschickungseinrichtungen zwischen der Ofenhalle und der angrenzenden Pfannenhalle ermöglicht es, die Ofenhalle gegen die benachbarten Hallen für die Weiterverarbeitung bis auf notwendige Öffnungen für Transportmittel vollständig abzuschotten. Dabei sind die oberhalb der Kranbahnträger angeordneten Bunker und die darüber befindlichen verfahrbaren Förderer beiderseits bis zum Dachbinder verkleidet. Bei Verzicht auf die Ofeneinhausung könnte die Ofenhalle von der benachbarten Halle durch eine Schutzwand getrennt sein.

Die Vorteile der erfindungsgemässen Anordnung bestehen darin, dass die zentrale Anordnung der Materialbunker nur ein Fördersystem für die Bereitstellung des Beschickungsgutes und alle notwendigen Zuschlagmittel erfordert, und dass mit einem Transportsystem von den Bunkern aus sowohl der Elektroschmelzofen als auch die Schmelze beim Einlaufen in die Pfanne am Abstich und in der Nachbehandlungseinrichtung versorgt werden können. In der Ofenhalle wird auf dem Arbeitsflur kein Raum mehr benötigt für die Bereitstellung von Zuschlag- und Legierungsmitteln. Transportwege für die Zuführung von Zuschlag- und Legierungsmittel zu den Vorratsbehältern, zum Ofen und in die Schmelze während des Abstiches und der Nachbehandlung entfallen. Es ergibt sich daher eine deutliche Einsparung von Hallenvolumen. Die zentrale Anordnung der Versorgungseinrichtungen für den Elektroschmelzofen ermöglicht, den gesamten Produktionsablauf mit einem Regelkreis zu erfassen, der die nacheinander erforderlichen Arbeitsschritte steuert und überwacht. Ein Ausführungsbeispiel der Erfindung ist in der Zeichnung schematisch dargestellt und nachfolgend beschrieben. Es zeigen:

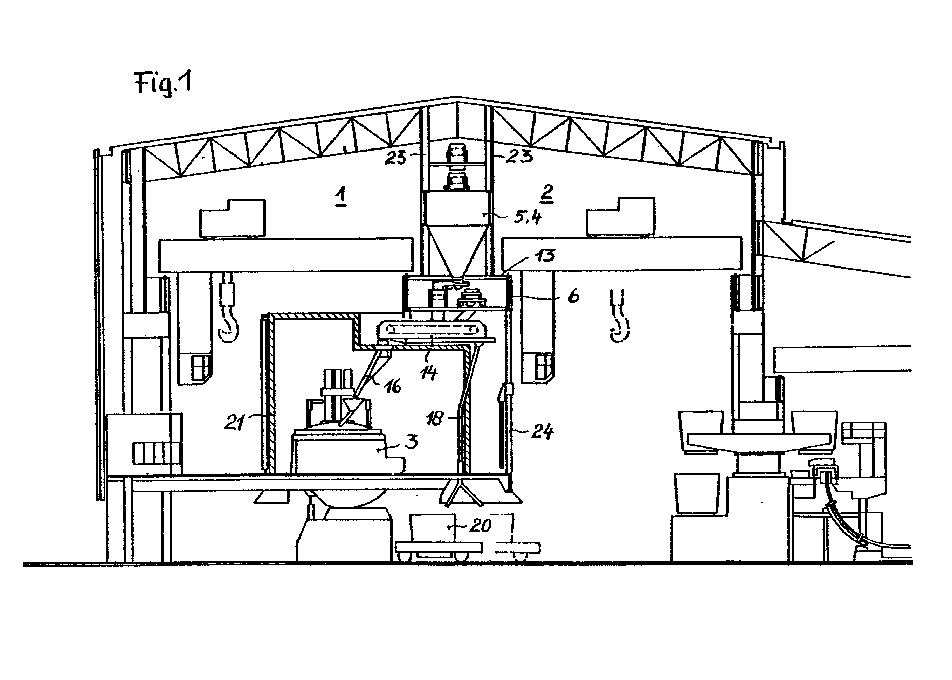

Fig. 1 eine Gesamtübersicht der erfindungsgemässen Anordnung,

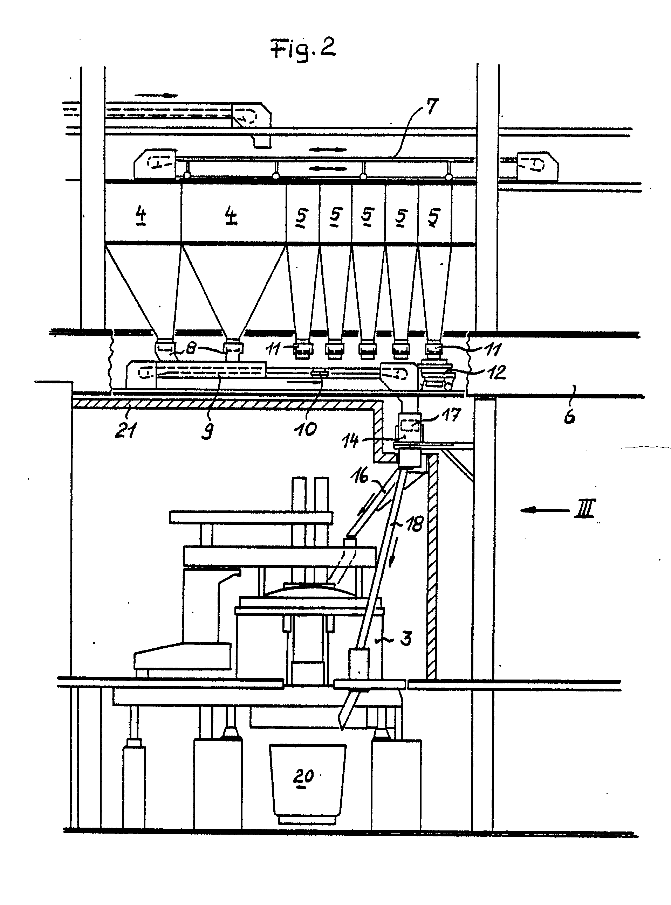

Fig. 2 die Anordnung des Elektroschmelzofens und zugehöriger Einrichtungen quer zur Hallenlängsachse,

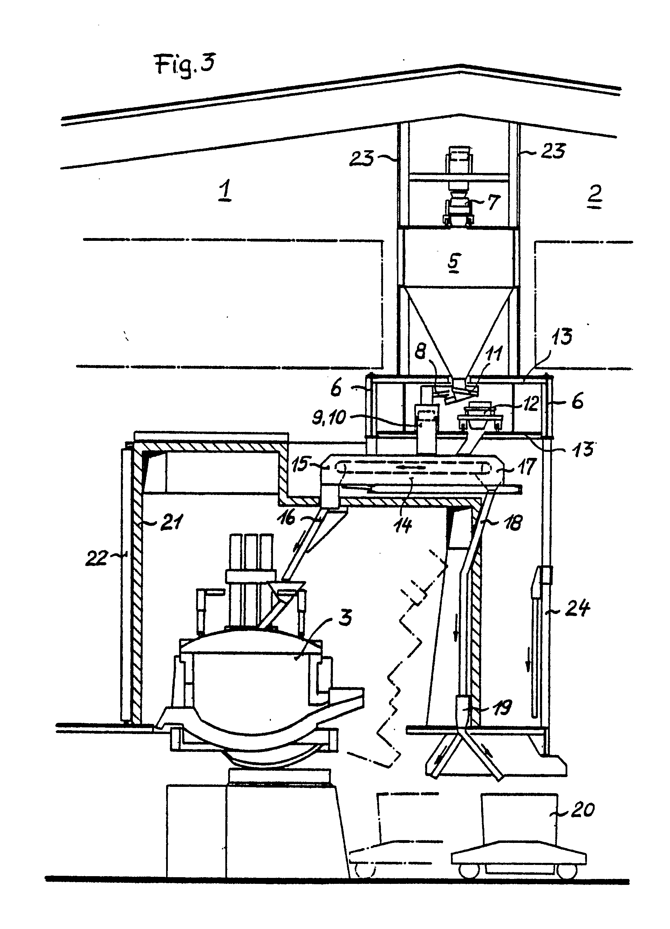

Fig. 3 eine Ansicht der Anordnung in Hallenlängsrichtung.

Mit 1 ist die Ofenhalle und mit 2 die angrenzende Pfannenhalle bezeichnet. Der Elektroschmelzofen 3 ist in der Ofenhalle 1 einseitig nahe der angrenzenden Pfannenhalle 2 angeordnet, um möglichst kurze Transportwege sowohl für das Beschickungsgut als auch für die fertige Schmelze zu erhalten. Zur optimalen Ausnutzung des Hallenvolumens sind die Vorratsbunker 4 für den Eisenträger, z.B. Eisenschwamm, und die Vorratsbunker 5 für die Zuschlagstoffe und Legierungsmittel in Hallenlängsrichtung hintereinander in der senkrechten Ebene zwischen den Kranbahnträger 6 der Ofen- und Pfannenhalle oberhalb des Elektroschmelzofens 3 angeordnet. Die Bunker 4 und 5 werden gefüllt mittels darüber angeordneter Fördereinrichtungen 7, die von ausserhalb der Halle befindlichen Lagerplätzen beschickt werden. Der Austrag aus den die Eisenträger enthaltenden Bunkern 4 erfolgt über die Auslasseinrichtungen 8 auf eine Fördereinrichtung 9 mit einer Dosiereinrichtung 10. Die Legierungsmittel und Zuschlagstoffe werden aus den Bunkern 5 über Auslasseinrichtungen 11 in verfahrbare, für genaue Abwägungen eingerichtete Dosiereinrichtungen 12 geleitet. Die in Hallenlängserstreckung parallel zueinander angeordneten Förder- und Dosiereinrichtungen 9, 10 und 12 befinden sich unmittelbar zwischen den Kranbahnträgern 6. Eine obere und untere Abdeckung 13 des Übergabe- und Transportraumes dient dem Schutz gegen Staub und Lärm. Ein tiefergelegener, quer in die Ofenhalle 1 führender reversibler Förderer 14 nimmt das Beschickungsgut auf und führt es über die ofenseitige Abwurfeinrichtung 15 und ein daran angeschlossenes Beschickungsrohr 16 dem Ofen 3 zu. Für die Behandlung der Schmelze während des Abstiches und die Nachbehandlung in der Pfanne werden die Zuschlagstoffe aus einem oder mehreren der Bunker 5 entnommen, in der Dosiereinrichtung 12 abgewogen und dem reversiblen Förderer 14 zugeführt, der sie mit umgekehrter Transportrichtung über die der Pfannenhalle zugewandten Abwurfeinrichtung 17 in des Beschickungsrohr 18 leitet. Mittels der Umlenkeinrichtung 19 werden die Zuschlagstoffe der Schmelze während des Abstiches oder zur Nachbehandlung in der Pfanne 20 beigegeben. Der Elektroschmelzofen 3 ist von einem Gehäuse 21 allseitig umgeben, wobei die der Ofenhalle 1 zugewandte Seitenwand 22 verfahrbar ist. Die Einhausung gewährleistet weitgehenden Schutz gegen die vom Ofen ausgehenden Emissionen wie Staub, Hitze und Lärm. Die Rauchgase werden über innerhalb des Gehäuses angeordnete Saugkanäle abgesaugt, wofür eine wesentlich geringere Ventilatorleistung benötigt wird als für die Absaugung aus der gesamten Ofenhalle. Eine weitere Abschirmung der Ofenhalle 1 gegen die angrenzende Pfannenhalle 2 ist dadurch gegeben, dass die oberhalb der Kranbahnträger 6 angeordneten Bunker 4, 5 und die darüber befindlichen Fördereinrichtungen 7 beiderseits bis zum Dachbinder mit Verkleidungen 23 versehen sind. Ausserdem kann bei Verzicht auf die Ofeneinhausung die Ofenhalle 1 von der Pfannenhalle 2 durch eine mit notwendigen Öffnungen für Transportmittel versehene Schutzwand 24 vollständig getrennt sein.

**Patentansprüche**

1. Emissionsgeschützte Anordnung eines in der Ofenhalle auf der Seite nahe der an die Ofenhalle angrenzenden Pfannenhalle befindlichen Elektroschmelzofens und oberhalb des Elektroschmelzofens angeordneter Bunker-Beschickungseinrichtungen, mit denen das Beschickungsgut über Förderer in diese Bunker transportiert, aus diesen Bunkern über Förder- und Dosiereinrichtungen abgezogen und durch Beschickungsrohre dem Ofengefäss zugeführt wird, dadurch gekennzeichnet, dass die Eisenträger-, Zuschlagstoff- und Legierungsmittelbunker (4, 5) mit den zugehörigen Auslass-, Förder- und Dosiereinrichtungen (8 bis 12) hintereinander in Hallenlängsrichtung in der senkrechten Ebene zwischen den Kranbahnen (6) der Ofenhalle (1) und der angrenzenden Pfannenhalle (2) angeordnet sind, und ein tiefergelegener reversibler Förderer (14) mit an beiden Enden befindlichen Abwurfeinrichtungen (15, 17) mit anschliessenden Beschickungsrohren (16, 18) quer zur Hallenlängserstreckung vorgesehen ist.

2. Anordnung nach Anspruch 1, dadurch gekennzeichnet, dass der Austrag aus den Legierungsmittel und Zuschlagstoffen enthaltenden Bunkern (5) in eine parallel der Fördereinrichtung (9) verfahrbare Dosiereinrichtung (12) erfolgt, die die Mittel dem reversiblen Förderer (14) zuführt.

3. Anordnung nach Anspruch 1 und 2, dadurch gekennzeichnet, dass an dem quer in die Ofenhalle (1) führenden reversiblen Förderer (14) an der ofenseitigen Abwurfeinrichtung (15) ein oder mehrere Beschickungsrohre (16) für die Ofenfüllung und an der gegenüberliegenden Abwurfeinrichtung (17) Beschickungsrohre (18) für den Abstich und für sekundärmetallurgische Massnahmen in der Pfanne (20) angeschlossen sind.

4. Anordnung nach Anspruch 1, dadurch gekennzeichnet, dass der Elektroschmelzofen (3) von einem Gehäuse (21) mit der Ofenhalle zugewandter verfahrbarer Seitenwand (22) allseitig umgeben ist und Öffnungen für die Durchführung der Beschickungsrohre (16, 18) aufweist.

5. Anordnung nach Anspruch 1, dadurch gekennzeichnet, dass die Ofenhalle (1) gegen die angrenzende Pfannenhalle (2) bis auf notwendige Öffnungen für Transportmittel durch beiderseitige Verkleidung (23) der obenliegenden Bunker (4, 5) mit den darüber befindlichen Förderern (7) und durch eine Schutzwand (24) vollständig abgeschottet ist.

### Claims

1. Arrangement, protected against emission, of an electric smelting furnace in the furnace shed, on the side close to the ladle shed which borders on the furnace shed, and of bin-charging devices arranged above the electric smelting furnace, by means of which charging devices the charge is conveyed into these bins by way of conveyors, withdrawn from these bins by means of conveyor and dosing devices and delivered to the furnace vessel through charging pipes, characterised in that the bins for iron-carrying material, additives and alloying agents, together with the associated outlet, conveyor and dosing devices (8 to 12) are arranged one behind the other in the longitudinal direction of the shed in the vertical plane between the crane tracks (6) of the furnace shed (1) and the adjacent ladle shed (2), and a reversible conveyor (14) situated at a lower level and having discharge devices (15, 17) at both ends with adjacent charging pipes (16, 18) is provided transversely to the longitudinal direction of the shed.

2. Arrangement according to claim 1, characterised in that discharge from the bins (5) containing alloying agents and additives takes place into a dosing device (12) which is displaceable parallel to the direction of the conveyor (9) and delivers the material to the reversible conveyor (14).

3. Arrangement according to claims 1 and 2, characterised in that, on the charging device leading transversely into the furnace shed (1), one or more changing pipes (16) for charging the furnace are attached to the discharge device (15) facing the furnace, and charging pipes (18) for tapping and for secondary measures in the ladle (2) are attached to the discharge device (17) at the opposite end.

4. Arrangement according to claim 1, characterised in that the electric smelting furnace (3) is surrounded on all sides by a housing (21) having a displaceable side wall (22) facing the furnace shed, and with openings for the passage of the charging pipes (16, 18).

5. Arrangement according to claim 1, characterised in that, except for the necessary openings for transport means, the furnace shed (1) is completely partitioned off against the adjacent ladle shed (2) by a cladding (23) on both sides of the bins (4, 5) situated at the top and of the conveyors above them, and by a protective wall (24).

### Revendications

1. Disposition, protégée contre des émissions, d'un four de fusion électrique situé dans la halle du four sur le côté à proximité de la halle de la poche de coulée adjacente à la halle du four, et de dispositifs de chargement avec trémies montés au-dessus du four de fusion électrique, avec lesquels le produit à charger est amené dans ces trémies par l'intermédiaire de transporteurs, est soutiré de ces trémies par l'intermédiaire de dispositifs de transport et de dosage et amené par des tuyaux de chargement à la cuve du four, caractérisée en ce que les trémies (4, 5) pour matières à base de fer, matières d'addition et agents d'alliage, munies des dispositifs correspondants (8 à 12) de soutirage, transport et dosage, sont disposées les unes derrière les autres dans la direction longitudinale des halles, dans le plan vertical situé entre les voies de roulement de grues (6) de la halle (1) du four et de la halle adjacente (2) de la poche de coulée, et en ce qu'un transporteur réversible (14), placé plus bas, pourvu à ses deux extrémités de dispositifs de déversement (15, 17) avec tuyaux de chargement (16, 18) s'y raccordant, est prévu transversalement par rapport à l'extension longitudinale des halles.

2. Disposition selon la revendication 1, caractérisée en ce que la sortie des trémies (5) contenant des agents d'alliage et des matières d'addition s'effectue dans un dispositif de dosage (12) déplaçable parallèlement au dispositif de transport (9) et qui amène les agents au transporteur réversible (14).

3. Disposition selon les revendications 1 et 2, caractérisée en ce que, à partir du transporteur réversible (14) passant en direction transversale dans la halle (1) du four, au dispositif de déversement (15) situé du côté du four, sont raccordés un ou plusieurs tuyaux de chargement (16) pour le remplissage du four et au dispositif de déversement (17), situé à l'opposé, sont raccordés des tuyaux de chargement (18) pour la coulée et pour des moyens secondaires de métallurgie prévus dans la poche de coulée (20).

4. Disposition selon la revendication 1, caractérisée en ce que le four de fusion électrique (3) est entouré de tous côtés par un carter (21) pourvu d'une paroi latérale déplaçable (22) située en regard de la halle du four et présente des ouvertures pour le passage des tuyaux de chargement (16, 18).

5. Disposition selon la revendication 1, caractérisée en ce que la halle (1) du four est entièrement cloisonnée de façon étanche vis-à-vis de la halle adjacente (2) de la poche de coulée, à l'exception d'ouvertures nécessaires pour moyens de transport, au moyen d'un chemisage (23), prévu des deux côtés, des trémies (4, 5) situées dans le haut et munies des transporteurs (7) prévus au-dessus, ainsi qu'au moyen d'une paroi de protection (24).

Fig.1

0 058 774

# Fig. 2

Fig.3